# EUROPÄISCHE PATENTSCHRIFT

(11) **EP 0 941 800 B1**
(45) Veröffentlichungstag und Bekanntmachung des Hinweises auf die Patenterteilung: **04.10.2001**
(21) Anmeldenummer: 99100977.0
(22) Anmeldetag: 21.01.1999
(51) Int. Cl.: B23Q 5/34, B23Q 7/14, B23P 21/00, B23P 19/00

(54) **Montagemaschine**
Assembling machine
Machine d'assemblage

(30) Priorität: 10.03.1998 DE 19810224
(43) Veröffentlichungstag der Anmeldung: 15.09.1999
(73) Patentinhaber: SIM Automation GmbH & Co KG, 37308 Heiligenstadt (DE)
(72) Erfinder: Dornieden, Georg, 37318 Burgwalde (DE); Strietzel, Steffen, 37308 Heilbad Heiligenstadt (DE)
(74) Vertreter: Albrecht, Rainer Harald, Dr.-Ing.

(56) Entgegenhaltungen:
- EP-A- 0 054 890
- DE-A- 3 714 108
- DE-A- 4 320 501
- FR-A- 2 283 757
- GB-A- 2 263 457
- US-A- 4 535 882
- US-A- 5 004 094

## Beschreibung

Die Erfindung betrifft eine Montagemaschine mit
einem Maschinengestell,
zumindest einer maschinenfesten Arbeitsstation mit einer Montage- oder Bearbeitungseinrichtung,
Werkstückträgern,
einer linearen Transfervorrichtung für den Transport und die Positionierung der Werkstückträger mit aufgesetztem Werkstück an der Arbeitsstation und
einem Antrieb für die Montage- oder Bearbeitungseinrichtung,
wobei der Antrieb eine motorisch angetriebene Steuerwelle mit aufgesetzten Kurvenscheiben und von den Kurvenscheiben gesteuerte Zug/Druck-Betätigungselemente für die Montage- oder Bearbeitungsvorrichtung aufweist.

Nach dem Stand der Technik (DE 43 20 501 A1, DE 196 03 253 A1), von dem die Erfindung ausgeht, weist die Transfervorrichtung der Montagemaschine eine Antriebswelle, ein räumliches Kurvengetriebe mit Stegkurve auf der Antriebswelle und eine umlaufende Transportbahn, an der die Werkstückträger geführt sind, auf. Die Werkstückträger sind auf die Stegkurve aufgesetzt und werden bei Rotation der Antriebswelle von der eine schraubenwendelförmige Bewegung ausführenden Stegkurve vorwärts bewegt. Die an der Transportbahn entlang bewegten und von der Stegkurve angetriebenen Werkstückträger werden in einer Beschickstation mit einem Werkstück bestückt. In einer entlang der Transfervorrichtung angeordneten Entnahmestation werden die Werkstücke von den Werkstückträgern wieder abgenommen.

Im Rahmen der bekannten Maßnahmen ist es nicht möglich, Werkstückträger mit aufsitzendem Werkstück aus der Transfervorrichtung auszuschleusen, einem Zwischenspeicher und/oder einer anderen Montagemaschine zuzuführen und anschließend wieder in die Transfervorrichtung der Montagemaschine einzuschleusen. Das Kurvengetriebe als Herzstück der Transfervorrichtung ist ferner konstruktiv aufwendig. Die Erweiterung einer bestehenden Montagemaschine durch zusätzliche Arbeitsstationen erfordert aufwendige Änderungen an der Transfervorrichtung.

Der Erfindung liegt die Aufgabe zugrunde, eine Montagemaschine mit einer im Aufbau einfachen Transfervorrichtung anzugeben, in welche Werkzeugträger mit bereits aufsitzendem Werkstück eingeschleust werden können. Es versteht sich, daß das Einschleusen so erfolgen muß, daß die eingeschleusten Werkstückträger zu einem durch den Arbeitstakt der Montage- oder Bearbeitungseinrichtungen definierten Zeitpunkt in der Arbeitsstation exakt positioniert sind. Die zulässigen Toleranzen sind klein.

Zur Lösung dieser Aufgabe lehrt die Erfindung, daß ausgehend vom Stand der Technik gemäß Oberbegriff von Anspruch 1 die Transfervorrichtung einen intermittierend angetriebenen Riementrieb mit mindestens einem Zahnriemen aufweist, der außenseitig ein an ein bodenseitiges Zahnprofil der Werkstückträger angepaßtes Kupplungsprofil aufweist, daß die Werkstückträger mit aufsitzendem Werkstück in einer Reihe auf der Bahn einer Zuführeinrichtung vor einem Stauelement aufgestaut sind, daß ein Kupplungsabschnitt des Riementriebes heb- und senkbar angeordnet ist, wobei der Kupplungszahnriemen bei der Hubbewegung in das bodenseitige Kupplungsprofil des an dem Stauelement anliegenden ersten Werkstückträgers kuppelnd eingreift, und daß die Hubbewegung des Kupplungsabschnittes und die Betätigung des Stauelementes so gesteuert sind, daß der durch die Hubbewegung des Riementrieb-Kupplungsabschnittes erfaßte und mit der Transportbewegung des Zahnriemens mitgeführte Werkstückträger nach einer vorgegebenen Anzahl von Schritten die Bearbeitungsposition an der Arbeitsstation erreicht. Als Zuführeinrichtung ist ein Endlosförderer mit umlaufenden Schnüren u. dgl. einsetzbar. Die auf der Zuführeinrichtung nacheinander herangeführten Werkstückträger mit jeweils einem Werkstück stauen sich dicht an dicht gedrängt an dem Stauelement auf. Die Kupplung der Werkstückträger an die Transfervorrichtung erfolgt durch die vertikale Stellbewegung eines Kupplungsabschnittes des Riementriebes.

Gemäß einer bevorzugten Ausführung der Erfindung ist der Antrieb für die Montage- oder Bearbeitungseinrichtung als Zentralantrieb ausgebildet und weist ein Rast/Schritt-Getriebe für die intermittierende Bewegung des Riementriebs der Transfervorrichtung auf. Die Steuerung der Hubbewegung des Kupplungsabschnittes sowie die Betätigung des Stauelementes erfolgt vorteilhafterweise durch Zug/Druck-Betätigungselemente, deren Stellbewegung ebenso wie die Betätigung des Rast/Schritt-Getriebes von der Drehbewegung der Steuerwelle des Zentralantriebs abgeleitet ist. Die Steuerung aller Bewegungen durch den Zentralantrieb unter Verwendung von Zug/Druck-Betätigungselementen ermöglicht eine exakte Abstimmung der Kupplungsbewegungen, Transport-bewegungen und Arbeitsbewegungen der Bearbeitungs- und Montageeinrichtung.

Gemäß einer bevorzugten Ausführung der Erfindung weist die Transfervorrichtung Führungsleisten auf, an denen die von dem Riementrieb erfaßten Werkstückträger seitlich geführt sind, wobei eine Führungsleiste als Präzisionsanschlag mit einer im Rahmen der Bearbeitungstoleranzen präzise vorgegebenen Zuordnung zur Montage- und Bearbeitungseinrichtung ausgebildet ist. Ferner ist eine Spanneinrichtung mit Spannelement vorgesehen, welches die Werkstückträger in der Arbeitsposition seitlich beaufschlagt und an dem Präzisionsanschlag fixiert. Zweckmäßig sind das Spannelement und der Werkstückträger mit einander zugeordneten Zentrierungsflächen ausgebildet. Die Zentrierung einerseits zwischen Spannelement und Werkstückträger und andererseits zwischen dem Präzisionsanschlag und einer komplementären Anschlagfläche des Werkstückträgers ermöglicht präzise Bearbeitungen und Montagevorgänge an dem auf dem Werkstückträger aufsitzenden Werkstück.

Gemäß einer bevorzugten Ausführung weist der Riementrieb zwei parallel angeordnete Zahnriemen für die Transportbewegung der Werkstückträger und einen synchron zu diesen bewegbaren Kupplungszahnriemen auf, wobei der Kupplungszahnriemen zwischen den parallelen Zahnriemen angeordnet ist und eine vertikale Kupplungsbewegung zur Erfassung des an dem Stauelement der Zuführeinrichtung anliegenden Werkstückträgers ausführt. Die parallel angeordneten, für eine horizontale Transportbewegung der Werkstückträger vorgesehenen Zahnriemen und der Kupplungszahnriemen sind mechanisch miteinander gekuppelt, so daß eine synchrone Bewegung sichergestellt ist.

Gemäß einer bevorzugten Ausführung der Erfindung weist der Riementrieb ein Antriebsrad sowie mindestens zwei Umlenkräder auf, wobei die parallelen Zahnriemen für den Transport der Werkstückträger über das Antriebsrad und gemeinsam mit dem Kupplungszahnriemen über ein Umlenkrad geführt sind und wobei der Kupplungszahnriemen über die beiden Umlenkräder geführt ist. Zweckmäßig ist eine weitere Ausgestaltung dergestalt, daß der Kupplungszahnriemen im Obertrum und im Untertrum des Riementriebs über einen Schuh geführt ist, der an eine die vertikale Kupplungsbewegung ausführende Stelleinrichtung angeschlossen ist. Es versteht sich, daß die Kupplungszahnriemenlänge des über die ortsfest gelagerten Umlenkräder geführten Kupplungszahnriemens so bemessen ist, daß der Schuh die erforderlichen Stellbewegungen ausführen kann. Ausreichend ist eine Stellbewegung im Bereich von weniger als 10 mm bis einigen Zentimetern. Die beschriebene Ausführung zeichnet sich dadurch aus, daß bei den Stellbewegungen nur geringe Massen bewegt werden müssen. Eine andere, von der Lehre der Erfindung ebenfalls umfaßte Ausführung sieht vor, daß das den Kupplungszahnriemen umlenkende Rad an eine die vertikale Kupplungsbewegung ausführende Stelleinrichtung angeschlossen ist.

In weiterer Ausgestaltung lehrt die Erfindung, daß dem Kupplungsabschnitt des Riementriebs eine Stelleinrichtung mit Energiespeicher zugeordnet ist, welche die durch ein Zug/Druck-Betätigungselement ausgelöste Stellbewegung des Kupplungsabschnittes verstärkt. Im Rahmen der Erfindung liegt es, als Energiespeicher eine mechanische Spannfeder einzusetzen. Gemäß einer bevorzugten Ausführung der Erfindung wird als Energiespeicher eine Luftfeder verwendet, die einem geschlossenen pneumatischen System mit Druckspeicher angehört und mit einem konstanten Druck aus dem Druckspeicher beaufschlagt ist.

Im folgenden wird die Erfindung anhand lediglich ein Ausführungsbeispiel darstellenden Zeichnungen erläutert. Es zeigen schematisch
- Fig. 1: die Seitenansicht eines Ausführungsbeispiels einer erfindungsgemäßen Montagemaschine mit mehreren entlang einer linearen Transfervorrichtung angeordneten Arbeitsstationen,
- Fig. 2: eine Seitenansicht der Transfervorrichtung,
- Fig. 3: eine Draufsicht der in Fig. 2 dargestellten Transfervorrichtung,
- Fig. 4: den Schnitt A-A aus Fig. 2,
- Fig. 5a und 5b: einen Werkstückträger in einer Seitenansicht sowie in einer die Stirnseite zeigenden Ansicht.

Zum grundsätzlichen Aufbau der in den Figuren dargestellten Montagemaschine gehören ein Maschinengestell 1, mehrere maschinenfeste Arbeitsstationen 2 mit jeweils einer Montage- oder Bearbeitungseinrichtung 3, eine lineare Transfervorrichtung 4 für den Transport und die Positionierung von Werkstückträgern 5 mit aufgesetztem Werkstück 6 an den Arbeitsstationen 2 sowie ein Antrieb 7 für die Montage- oder Bearbeitungseinrichtungen. Der Antrieb 7 ist im Ausführungsbeispiel als Zentralantrieb ausgebildet und weist eine motorisch angetriebene Steuerwelle 10 mit aufgesetzten Kurvenscheiben 11, von den Kurvenscheiben 11 gesteuerte Zug/Druck-Betätigungselemente 12 und ein nicht dargestelltes Rast/Schritt-Getriebe für den Antrieb der Transfervorrichtung 4 auf.

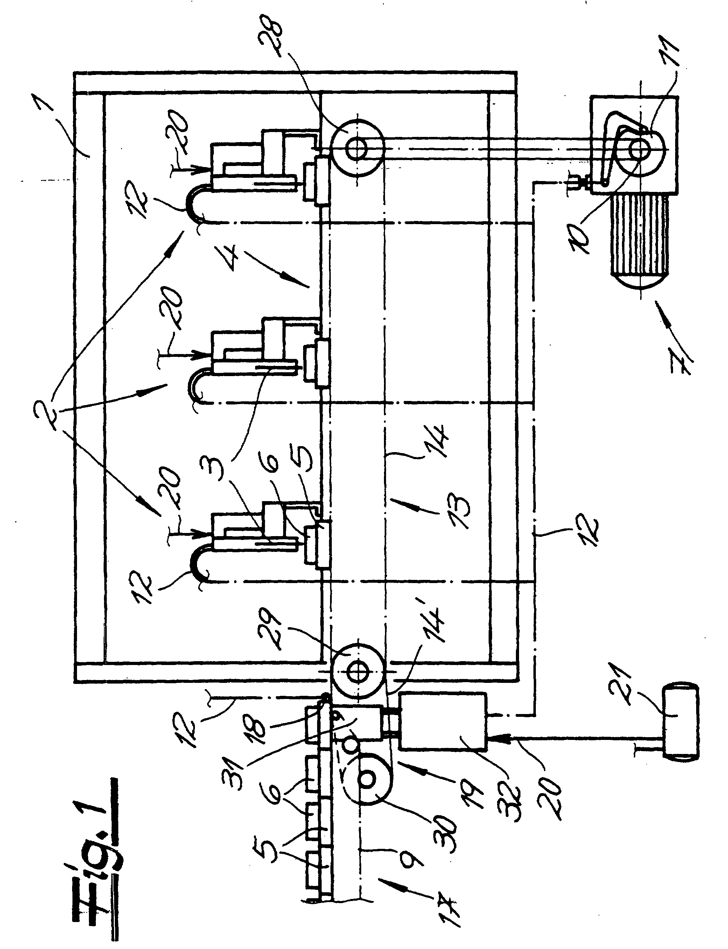

Die Transfervorrichtung 4 umfaßt einen intermittierend angetriebenen Riementrieb 13 mit mindestens einem Zahnriemen 14, der außenseitig ein an ein bodenseitiges Zahnprofil 15 der Werkstückträger angepaßtes Kupplungsprofil 16 besitzt. Innenseitig ist der Zahnriemen mit einem Profil ausgerüstet, welches in eine Verzahnung der Räder des Riementriebes eingreift. Die Werkstückträger 5 mit aufsitzendem Werkstück 6 sind in einer Reihe auf der Bahn einer Zuführeinrichtung 17 vor einem Stauelement 18 aufgestaut. Die Zuführeinrichtung weist kontinuierlich umlaufende Schnüre 9 auf. Der schematischen Darstellung in Fig. 1 entnimmt man, daß ein Kupplungsabschnitt 19 des Riementriebs heb- und senkbar angeordnet ist, wobei der Kupplungszahnriemen 14' bei der Hubbewegung in das außenseitige Zahnprofil 15 des auf den Schnüren aufliegenden und gegen das Stauelement 18 bewegten ersten Werkstückträgers 5 kuppelnd eingreift. Die Hubbewegung des Kupplungs-abschnittes 19 und die Betätigung des Stauelementes 18 sind beispielsweise durch Zug/Druck-Betätigungselemente 12 steuerbar, deren Stellbewegung ebenso wie die Betätigung des Rast/Schritt-Getriebes von der Drehbewegung der Steuerwelle 10 abgeleitet und so eingestellt ist, daß der durch die Hubbewegung des Riementrieb-Kupplungsabschnittes 19 erfaßte und mit der Transportbewegung des Zahnriemens 14 mitgeführte Werkstückträger nach einer vorgegebenen Anzahl von Schritten des intermittierend bewegten Riementriebs die Bearbeitungsposition an der ersten Arbeitsstation 2 erreicht. Vorzugsweise sind Schrittlänge und der Abstand zwischen Stauelement 18 und der ersten Arbeitsstation 2 so eingerichtet, daß die Bearbeitungsposition in einem einzigen Schritt erreicht wird.

Zur Verstärkung der Kupplungsbewegung ist dem Kupplungsabschnitt 19 des Riementriebs 13 eine Stelleinrichtung mit Energiespeicher 20 zugeordnet, der die durch das Zug/Druck-Betätigungselement 12 ausgelöste Stellbewegung des Kupplungsabschnittes 19 verstärkt. Der Energiespeicher 20 besteht aus einer Luftfeder, die einem geschlossenen pneumatischen System mit Druckspeicher 21 angehört. Sie wird mit konstantem Druck aus dem Druckspeicher 21 beaufschlagt.

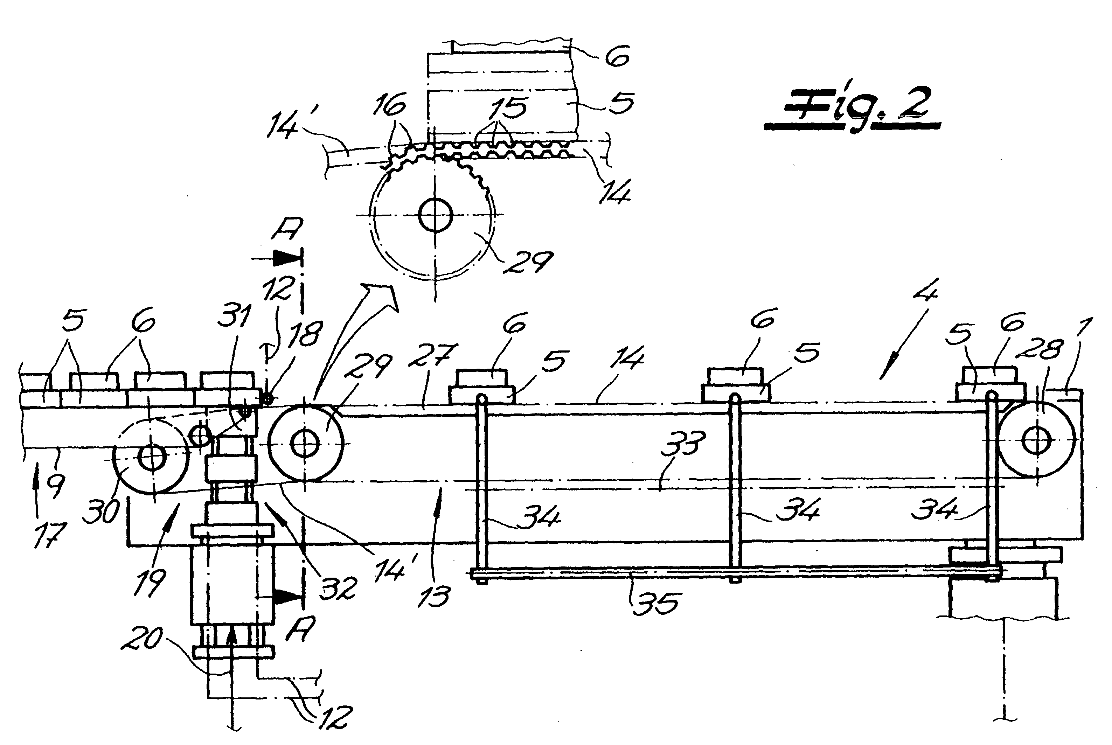

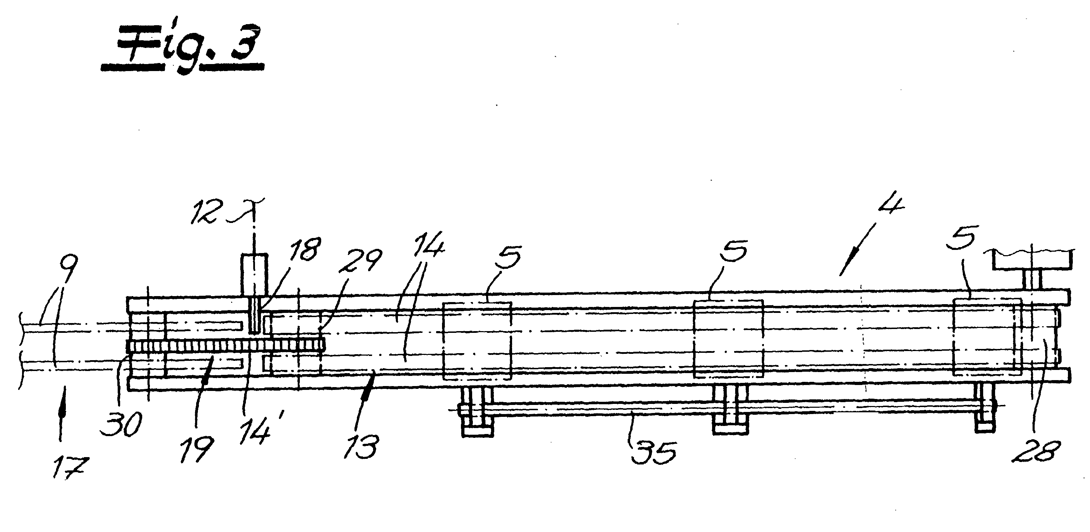

Einer vergleichenden Betrachtung insbesondere der Fig. 2 und 3 entnimmt man, daß im Ausführungsbeispiel und nach bevorzugter Ausführungsform der Erfindung der Riementrieb 13 zwei parallel angeordnete Zahnriemen 14 für die Transportbewegung der Werkstückträger und einen synchron zu diesen bewegbaren Kupplungszahnriemen 14' aufweist. Die Zahnriemen 14 sind im Obertrum des Riementriebs über eine Gleitfläche 27 des Maschinengestells geführt. Der Kupplungszahnriemen 14' ist zwischen den parallelen Zahnriemen 14 angeordnet und führt eine vertikale Kupplungsbewegung zur Erfassung des an dem Stauelement 18 der Zuführeinrichtung 17 anliegenden Werkstückträgers 5 aus. Die Kupplungszahnriemen 14' und die weiteren Zahnriemen 14 sind mechanisch miteinander gekoppelt.

Der Riementrieb 13 weist ein Antriebsrad 28 sowie mindestens zwei Umlenkräder 29, 30 auf. Die parallelen Zahnriemen 14 für den Transport der Werkstückträger 5 sind über das Antriebsrad 28 und gemeinsam mit dem Kupplungszahnriemen 14' über ein Umlenkrad 29 geführt. Der Kupplungszahnriemen 14' ist über die beiden Umlenkräder 29, 30 geführt. Aus der Fig. 2 geht hervor, daß der Kupplungszahnriemen 14' im Obertrum und im Untertrum des Riementriebs 13 über einen Schuh 31 geführt ist, der an eine die vertikale Kupplungsbewegung ausführende Stelleinrichtung 32 angeschlossen ist. Im Rahmen der Erfindung liegt es aber auch, daß das den Kupplungszahnriemen 14' umlenkende Rad 30 an eine die vertikale Kupplungsbewegung ausführende Stelleinrichtung angeschlossen ist.

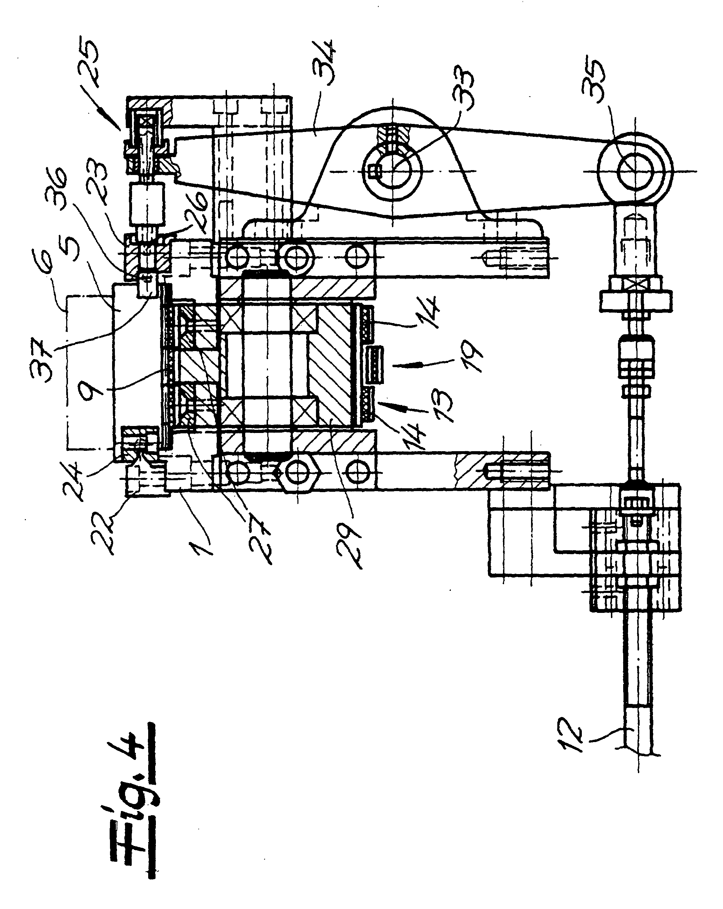

Insbesondere der Fig. 4 entnimmt man, daß die Transfervorrichtung Führungsleisten 22, 23 aufweist, an denen die von dem Riementrieb 13 erfaßten Werkstückträger 5 seitlich geführt sind. Eine Führungsleiste 22 ist als Präzisionsanschlag mit einer im Rahmen der Bearbeitungstoleranzen präzise vorgegebenen Zuordnung zu den Montage- und Bearbeitungseinrichtungen 3 der Arbeitsstationen 2 ausgebildet. Die Werkstückträger 5 können als Kunststofformteile ausgebildet sein, wobei die dem Präzisionsanschlag 22 zugeordnete Werkstückträgerseite paßgenau mit einer metallischen Leiste 24 ausgerüstet ist. Paßgenau meint insbesondere auch, daß die Abmessungen zum aufliegenden Werkstück 6 genau festliegen. Der gegenüberliegenden Seite des Werkstückträgers ist eine Spanneinrichtung 25 mit Spannelement 26 zugeordnet. Die Spanneinrichtung 25 weist einen um eine maschinenfeste Achse 33 drehbaren Schwenkhebel 34 auf, an den ein an den Zentralantrieb angeschlossenes Zug/Druck-Betätigungselement 12 angreift. Die jeweils einer Arbeitsstation zugeordneten Schwenkhebel 34 sind durch eine Stange 35 miteinander gekoppelt, so daß die Spannbewegungen synchron ausführbar sind (Fig. 3 und 4). Das an den Schwenkhebel 34 angeschlossene Spannelement 26 beaufschlagt den Werkstückträger 5 in der Bearbeitungsposition seitlich und fixiert ihn an dem Präzisionsanschlag 22. Spannelement 26 und Werkstückträger 5 sind mit zugeordneten Zentrierungsflächen 36 ausgerüstet.

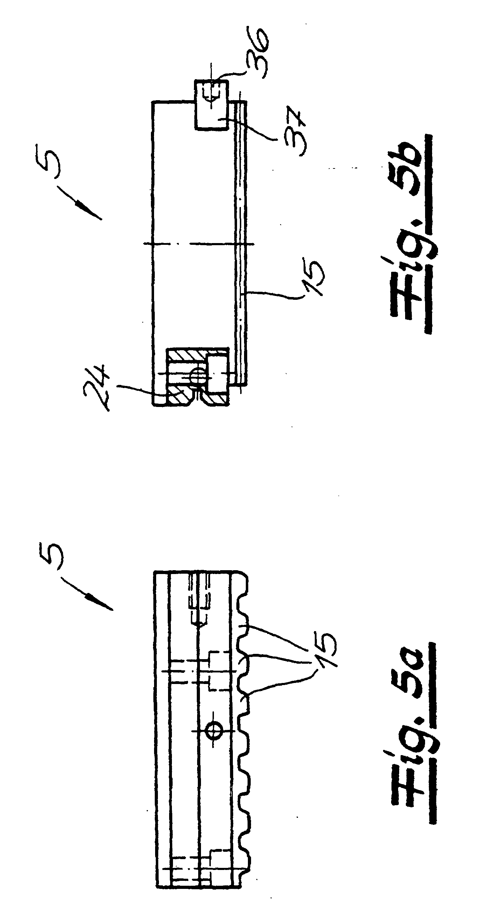

Der Werkstückträger 5 besteht aus einem Kunststoffkörper mit unterseitig eingeformtem Kupplungsprofil (vgl. Fig. 5a). Die mit dem Präzisionsanschlag zusammenwirkende metallische Leiste 24 ist in den Kunststoffträger eingesetzt. Ferner enthält der Werkstückträger 5 einen metallischen Einsatz 37 mit einer Zentrierungsfläche 36, die mit dem Spannelement 26 zusammenwirkt.

## Patentansprüche

1. Montagemaschine mit
einem Maschinengestell (1),
zumindest einer maschinenfesten Arbeitsstation (2) mit einer Montage- oder Bearbeitungseinrichtung (3),
Werkstückträgern,
einer linearen Transfervorrichtung (4) für den Transport und die Positionierung der Werkstückträger (5) mit aufgesetztem Werkstück (16) an der Arbeitsstation (2) und
einem Antrieb (7) für die Montage- oder Bearbeitungseinrichtung (3),
wobei der Antrieb (7) eine motorisch angetriebene Steuerwelle (10) mit aufgesetzten Kurvenscheiben (11) und von den Kurvenscheiben (11) gesteuerte Zug/Druck-Betätigungselemente (12) für die Montage- oder Bearbeitungsvorrichtung (3) aufweist, **dadurch gekennzeichnet, daß** die Transfervorrichtung (4) einen intermittierend angetriebenen Riementrieb (13) mit mindestens einem Zahnriemen (14, 14') aufweist, der außenseitig ein an ein bodenseitiges Zahnprofil (15) der Werkstückträger (5) angepaßtes Kupplungsprofil aufweist, **daß** die Werkstückträger (5) mit aufsitzendem Werkstück (6) in einer Reihe auf der Bahn einer Zuführeinrichtung (17) vor einem Stauelement (18) aufgestaut sind, **daß** ein Kupplungsabschnitt (19) des Riementriebes (13) heb- und senkbar angeordnet ist, wobei der Kupplungszahnriemen (14') bei der Hubbewegung in das bodenseitige Zahnprofil (15) des an dem Stauelement (18) anliegenden ersten Werkstückträgers (5) kuppelnd eingreift, und **daß** die Hubbewegung des Kupplungsabschnittes (19) sowie die Betätigung des Stauelementes (18) so gesteuert sind, **daß** der durch die Hubbewegung des Riementrieb-Kupplungsabschnittes (19) erfaßte und mit der Transportbewegung des Zahnriemens (14, 14') mitgeführte Werkstückträger (5) nach einer vorgegebenen Anzahl von Schritten des in Schritten intermittierend bewegten Riementriebs (13) die Bearbeitungsposition an der Arbeitsstation (2) erreicht.

2. Montagemaschine nach Anspruch 1, **dadurch gekennzeichnet, daß** der Antrieb (7) für die Montage- oder Bearbeitungseinrichtung (3) als Zentralantrieb ausgebildet ist und ein Rast/Schritt-Getriebe für die intermittierende Bewegung des Riementriebs (13) der Transfervorrichtung (4) aufweist.

3. Montagemaschine nach Anspruch 2, **dadurch gekennzeichnet, daß** die Hubbewegung des Kupplungsabschnittes (19) sowie die Betätigung des Stauelementes (18) durch die Zug/Druck-Betätigungselemente (12) gesteuert sind, deren Stellbewegung ebenso wie die Betätigung des Rast/Schritt-Getriebes von der Drehbewegung der Steuerwelle (10) abgeleitet ist.

4. Montagemaschine nach einem der Ansprüche 1 bis 3, **dadurch gekennzeichnet, daß** die Transfervorrichtung (4) Führungsleisten (22, 23) aufweist, an denen die von dem Riementrieb (13) erfaßten Werkstückträger (5) seitlich geführt sind, wobei eine Führungsleiste (22) als Präzisionsanschlag mit einer im Rahmen der Bearbeitungstoleranzen präzise vorgegebenen Zuordnung zur Montage- und Bearbeitungseinrichtung (3) ausgebildet ist, und **daß** die Transfervorrichtung (4) eine Spanneinrichtung (25) mit Spannelement (26) aufweist, welches die Werkstückträger (5) in der Arbeitsposition seitlich beaufschlagt und an dem Präzisionsanschlag (22) fixiert.

5. Montagemaschine nach einem der Ansprüche 1 bis 4, **dadurch gekennzeichnet, daß** der Riementrieb (13) zwei parallel angeordnete Zahnriemen (14) für die Transportbewegung der Werkstückträger (5) und einen synchron zu diesem bewegbaren Kupplungszahnriemen (14') aufweist, wobei der Kupplungszahnriemen (14') zwischen den parallelen Zahnriemen (14) angeordnet ist, und eine vertikale Kupplungsbewegung zur Erfassung des an dem Stauelement (18) der Zuführeinrichtung (17) anliegenden Werkstückträgers (5) ausführt.

6. Montagemaschine nach Anspruch 5, **dadurch gekennzeichnet, daß** der Riementrieb (13) ein Antriebsrad (28) sowie mindestens zwei Umlenkräder (29, 30) aufweist, wobei die parallelen Zahnriemen (14) für den Transport der Werkstückträger (5) über das Antriebsrad (28) und gemeinsam mit dem Kupplungszahnriemen (14') über ein Umlenkrad (29) geführt sind und wobei der Kupplungszahnriemen (14') über die beiden Umlenkräder (29, 30) geführt ist.

7. Montagemaschine nach Anspruch 6, dadurch kennzeichnet, daß der Kupplungszahnriemen (14') im Obertrum und im Untertrum des Riementriebs (13) über einen Schuh (31) geführt ist, der an eine die vertikale Kupplungsbewegung ausführende Stelleinrichtung (32) angeschlossen ist.

8. Montagemaschine nach Anspruch 6, **dadurch gekennzeichnet, daß** das den Kupplungszahnriemen (14') umlenkende Rad (30) an eine die vertikale Kupplungsbewegung ausführende Stelleinrichtung angeschlossen ist.

9. Montagemaschine nach einem der Ansprüche 1 bis 8, **dadurch gekennzeichnet, daß** dem Kupplungsabschnitt (19) des Riementriebs (13) eine Stelleinrichtung mit Energiespeicher (20) zugeordnet ist, der die durch ein Zug/Druck-Betätigungselement (12) ausgelöste Stellbewegung des Kupplungsabschnittes (19) verstärkt.

10. Montagemaschine nach Anspruch 9, **dadurch gekennzeichnet, daß** der Energiespeicher (20) aus einer Luftfeder besteht, die mit einem konstanten Druck aus einem Druckspeicher beaufschlagt ist.

## Claims

1. An assembling machine, comprising
a machine frame (1),
at least one work centre (2) which is fixed to the machine and which comprises an assembling or machining device (3),
workpiece holders,
a linear transfer apparatus (4) for the transport of the workpiece holders (5), with clamped workpieces (16), and for the positioning thereof at the work centre (2), and
a drive (7) for the assembling or machining device (3),
wherein the drive (7) comprises a motor-driven camshaft (10) having fitted cam plates (11) and push/pull actuating elements (12), which are controlled by the cam plates (11), for the assembling or machining device (3), **characterised in that** the transfer apparatus (4) comprises an intermittently driven belt drive (13) having at least one toothed belt (14, 14') which on its outside has a coupling profile which is matched to a toothed profile (15) on the bottom of the workpiece holders (5), that the workpiece holders (5), with the workpieces (6) seated thereon, are banked up in a row on the track of a feeder device (17) in front of a retaining element (18), that a coupling section (19) of the belt drive (13) is disposed so that it can be raised and lowered, wherein during the lifting movement the coupling toothed belt (14') engages in the toothed profile (15) on the bottom of the first workpiece holder (5) which is seated against the retaining element (18), and that the lifting movement of the coupling section (19), as well as the actuation of the retaining element (18), are controlled so that the workpiece holder (5), which is grasped by the lifting movement of the belt drive coupling section (19) and which is entrained with the transport movement of the toothed belt (14, 14'), reaches the machining position at the work centre (2) after a predetermined number of steps of the belt drive (13), which is moved intermittently in steps.

2. An assembling machine according to claim 1, **characterised in that** the drive (7) for the assembling or machining device (3) is constructed as a central drive and comprises a locking step-by-step motion linkage for the intermittent movement of the belt drive (13) of the transfer apparatus (4).

3. An assembling machine according to claim 2, **characterised in that** the lifting movement of the coupling section (19), as well as the actuation of the retaining element (18), are controlled by the push/pull actuating elements (12), the actuating movement of which is derived from the rotary movement of the camshaft (10), as is the actuation of the locking step-by-step motion linkage.

4. An assembling machine according to any one of claims 1 to 3, **characterised in that** the transfer apparatus (4) comprises guide rails (22, 23) on which the workpiece holders (5) which are grasped by the belt drive (13) are laterally guided, wherein one guide rail (22) is constructed as a precision stop which is coordinated with the assembling and machining device (3), said coordination being accurately predetermined within the scope of the machining tolerances, and that the transfer apparatus (4) comprises a clamping device (25) with a clamping element (26), which in the working position acts laterally upon the workpiece holders (5) and fixes them to the precision stop (22).

5. An assembling machine according to any one of claims 1 to 4, **characterised in that** the belt drive (13) comprises two toothed belts (14), which are disposed in parallel, for the transport movement of the workpiece holders (5), and comprises a coupling toothed belt (14') which can be moved synchronously therewith, wherein the coupling toothed belt (14') is disposed between the parallel toothed belts (14) and executes a vertical coupling movement in order to grasp the workpiece holder (5) which is seated against the retaining element (18) of the feeder device (17).

6. An assembling machine according to claim 5, **characterised in that** the belt drive (13) comprises a drive wheel (28) and also comprises at least two deflection wheels (29, 30), wherein for the transport of the workpiece holders (5) the parallel toothed belts (14) are passed over the drive wheel (28) and are passed jointly with the coupling toothed belt (14') over one deflection wheel (29), and wherein the coupling toothed belt (14') is passed over both deflection wheels (29, 30).

7. An assembling machine according to claim 6, **characterised in that** in the upper run and in the lower run of the belt drive (13) the coupling toothed belt (14') is passed over a shoe (31) which is attached to an actuating device (32) which executes the vertical coupling movements.

8. An assembling machine according to claim 6, **characterised in that** the wheel (30) which deflects the coupling toothed belt (14') is attached to an actuating device which executes the vertical coupling movement.

9. An assembling machine according to any one of claims 1 to 8, **characterised in that** an actuating device which comprises an energy storage device (20) is associated with the coupling section (19) of the belt drive (13), which actuating device amplifies the actuating movement of the coupling section (19) which is initiated by a push/pull actuating element (12).

10. An assembling machine according to claim 9, **characterised in that** the energy storage device (20) consists of a pneumatic spring which is acted upon by a constant pressure from a compressed air accumulator.

## Revendications

1. Machine de montage comportant
un bâti de machine (1),
au moins un poste de travail (2) solidaire de la machine avec un dispositif de montage ou d'usinage (3),
des porte-pièces,
un dispositif de transfert linéaire (4) pour le transport et le positionnement des porte-pièces (5) avec pièce (16) mise en place au poste de travail (2) et
un dispositif d'entraînement (7) pour le dispositif de montage ou d'usinage (3),
la dispositif d'entraînement (7) comportant un arbre de commande (10) entraîné par un moteur avec disques à cames (11) disposés dessus et des éléments d'actionnement à traction/compression (12) commandés, pour le dispositif de montage ou d'usinage (3), **caractérisée en ce que** le dispositif de transfert (4) comporte une transmission à courroie (13) entraînée de manière intermittente avec au moins une courroie crantée (14, 14'), qui présente sur le côté extérieur, un profilé d'accouplement adapté à un profilé denté (15) côté fond du porte-pièce (5), **en ce que** les porte-pièces (5) avec la pièce (6) mise en place sont retenus en une rangée, sur la voie d'un dispositif d'amenée (17), devant un élément de retenue (18), **en ce qu'**une portion d'accouplement (19) de la transmission à courroie (13) est disposée de manière à pouvoir se relever et s'abaisser, la courroie crantée d'accouplement (14') s'engageant en accouplement, pendant le mouvement de levage, dans le profilé denté (15) côté fond du premier porte-pièce (5) qui s'applique contre l'élément de retenue (18), et **en ce que** le mouvement de levage de la portion d'accouplement (19) ainsi que l'actionnement de l'élément de retenue (18) sont commandés de manière que le porte-pièce (5), concerné par le mouvement de levage de la portion d'accouplement (19) de la transmission à courroie et entraîné par le mouvement de transport de la courroie crantée (14, 14'), atteigne la position d'usinage au poste de travail (2), après un nombre donné de pas de la transmission à courroie (13) déplacée par pas, de façon intermittente.

2. Machine de montage selon la revendication 1, **caractérisée en ce que** le dispositif d'entraînement (7) pour le dispositif de montage ou d'usinage (3) est conformé en dispositif d'entraînement central et comporte un mécanisme arrêt/avance pour le mouvement intermittent de la transmission à courroie (13) du dispositif de transfert (4).

3. Machine de montage selon la revendication 2, **caractérisée en ce que** le mouvement de levage de la portion d'accouplement (19) ainsi que l'actionnement de l'élément de retenue (18) sont commandés par les éléments d'actionnement à traction/compression (12) dont le mouvement de réglage ainsi que l'actionnement du mécanisme arrêt/avance sont dérivés du mouvement de rotation de l'arbre de commande (10).

4. Machine de montage selon l'une des revendications 1 à 3, **caractérisée en ce que** le dispositif de transfert (4) comporte des baguettes de guidage (22, 23) contre lesquelles sont guidées latéralement les porte-pièces (5) saisis par la transmission à courroie (13), une baguette de guidage (22) étant conformée en butée de précision avec une relation précise donnée, dans le cadre des tolérances d'usinage, par rapport au dispositif de montage et d'usinage (3), et **en ce que** le dispositif de transfert (4) comporte un dispositif de serrage (25) avec élément de serrage (26) qui agit latéralement sur les porte-pièces (5) en position de travail et les fixe contre la butée de précision (22).

5. Machine de montage selon l'une des revendications 1 à 4, **caractérisée en ce que** la transmission à courroie (13) comporte deux courroies crantées (14) disposées parallèlement pour le mouvement de transport des porte-pièces (5) et une courroie crantée d'accouplement (14') déplaçable de manière synchrone avec celles-ci, la courroie crantée d'accouplement (14') étant disposée entre les courroies crantées (14) parallèles, et exécutant un mouvement vertical d'accouplement pour saisir le porte-pièce (5) qui s'applique contre l'élément de retenue (18) du dispositif d'amenée (17).

6. Machine de montage selon la revendication 5, **caractérisée en ce que** la transmission à courroie (13) comporte une roue d'entraînement (28) ainsi qu'au moins deux roues de renvoi (29, 30), les courroies crantées (14) parallèles pour le transport des porte-pièces (5) passant sur la roue d'entraînement (28) et, avec la courroie crantée d'accouplement (14'), sur une roue de renvoi (29), et la courroie crantée d'accouplement (14') passant sur les deux roues de renvoi (29, 30).

7. Machine de montage selon la revendication 6, **caractérisée en ce que** la courroie crantée d'accouplement (14') passe, dans le brin supérieur et dans le brin inférieur de la transmission à courroie (13), sur un patin (31) qui est raccordé à un dispositif de réglage (32) qui exécute le mouvement d'accouplement vertical.

8. Machine de montage selon la revendication 6, **caractérisée en ce que** la roue (30) qui renvoie la courroie crantée d'accouplement (14'), est raccordée à un dispositif de réglage qui exécute le mouvement vertical d'accouplement.

9. Machine de montage selon l'une des revendications 1 à 8, **caractérisée en ce qu'**à la portion d'accouplement (19) de la transmission à courroie (13) est associé un dispositif de réglage avec accumulateur d'énergie (20) qui amplifie le mouvement de réglage de la portion d'accouplement (19), déclenché par un élément d'actionnement à traction/compression (12).

10. Machine de montage selon la revendication 9, **caractérisée en ce que** l'accumulateur d'énergie (20) est constitué d'un ressort pneumatique qui est sollicité par une pression constante provenant d'un accumulateur de pression.
